Europäisches Patentamt

European Patent Office

Office européen des brevets

(11) Veröffentlichungsnummer: **0 467 319 A2**

(12) **EUROPÄISCHE PATENTANMELDUNG**

(21) Anmeldenummer: **91111922.0**

(22) Anmeldetag: **17.07.91**

(51) Int. Cl.⁵: **B08B  15/00**

(30) Priorität: **18.07.90 DE 9010726 U**

(43) Veröffentlichungstag der Anmeldung:
**22.01.92 Patentblatt  92/04**

(84) Benannte Vertragsstaaten:
**AT DE ES FR GB IT NL**

(71) Anmelder: **Herberts Gesellschaft mit
beschränkter Haftung
Christbusch 25
W-5600 Wuppertal 2(DE)**

(72) Erfinder: **Enge, Manfred
Vonkeln 45 A
W-5600 Wuppertal 12(DE)**
Erfinder: **Gregor, Lothar
Dasnöckel 83
W-5600 Wuppertal 11(DE)**

(74) Vertreter: **Türk, Gille, Hrabal
Brucknerstrasse 20
W-4000 Düsseldorf 13(DE)**

(54) Entsorgevorrichtung für feste und gasförmige Abfallstoffe beim Herstellen von Gemischen aus pulvrigen Feststoffen und Bindemitteln mit flüchtigen Anteilen oder dergleichen, und deren Verwendung.

㊹ Es wird eine Entsorgevorrichtung für feste und gasförmige Abfallstoffe beim Herstellen von Gemischen aus pulvrigen Feststoffen und flüchtigen Bindemitteln oder dergleichen beschrieben, mit einer Absaugvorrichtung und mit einem Staubfilter, die dadurch gekennzeichnet ist, daß eine erste Absaugleitung mit wenigstens einem in die Leitung eingeschalteten Staubfilter und eine zweite Absaugleitung vorgesehen sind, welche über eine gemeinsame Leitung entsorgbar sind, wobei jede der Absaugleitungen je ein Ventil zum wahlweisen Öffnen der ersten und/oder der zweiten Absaugleitung aufweist.

Die Erfindung betrifft eine Entsorgevorrichtung für feste und gasförmige Abfallstoffe und deren Verwendung beim Herstellen von Gemischen aus pulvrigen Feststoffen und flüchtige Anteile enthaltenden Bindemitteln oder dergleichen, mit einer Absaugvorrichtung und mit einem Staubfilter.

Solche Entsorgevorrichtungen finden beispielsweise in der Lackindustrie Anwendung. Pulverförmige Feststoffe wie Pigmente oder Füllstoffe werden häufig erst mit einem Bindemittel und/oder Lösemittel besetzt, bevor sie Lackmaterialien zugesetzt werden. Beim Herstellen solcher Lackpasten werden die Bindemittel gegebenenfalls im Gemisch mit Lösemittel in Lacktrommeln vorgelegt, die Feststoffe werden dann unter Rühren eingearbeitet. Dabei läßt es sich nicht vermeiden, daß schon beim Einfüllvorgang in eine solche Lacktrommel die Feststoffe in Form von Staub teilweise zurückschlagen. Aus den Bindemitteln treten flüchtige Anteile aus, umso mehr, wenn sich beim schnellen Rühren der Lackpaste das zu verarbeitende Gut erwärmt (bis etwa 60°C) und ein nicht unbeträchtlicher Anteil an Lösemittel verdampft.

Die Stäube und Lösemittel der Dämpfe belasten nicht nur das Bedienungspersonal, sonder auch die Umwelt. Deshalb werden Lacktrommeln mit Absaughauben verschlossen, an denen eine Absaugvorrichtung vorgesehen ist. Mit dieser Absaugvorrichtung werden im Dampfraum über dem zu verarbeitenden Gut in der Lacktrommel Stäube und Gase abgezogen. Oftmals ist der Absaugvorrichtung ein Staubfilter vorgeschaltet, mit dem die Stäube aufgefangen werden. Dieser Staubfilter neigt jedoch dazu, sich zuzusetzen, so daß die Wirkung der gesamten Absaugvorrichtung beeinträchtigt wird. Daher muß das Absaugen jedesmal dann unterbrochen werden, wenn der Staubfilter ausgewechselt oder gereinigt werden muß.

Es ist daher die Aufgabe der Erfindung eine Entsorgevorrichtung zu schaffen, die auch im Langzeitbetrieb ohne großen Wartungsaufwand zuverlässig Stäube und Gasdämpge voneinander getrennt aus dem Arbeitsbereich der Lacktrommel abnimmt.

Diese Aufgabe wird von einer Entsorgevorrichtung der eingangs genannten Gattung mit den Merkmalen des Kennzeichens von Anspruch 1 gelöst. Vorteilhafte Ausgestaltungen sind in den Kennzeichen der Unteransprüche enthalten.

Bei der erfindungsgemäßen Entsorgevorrichtung sind eine erste Absaugleitung mit wenigstens einem in die Leitung eingeschalteten Staubfilter und eine zweite Absaugleitung vorgesehen, welche über eine gemeinsame Leitung entsorgbar sind, wobei jede der Absaugleitungen je ein Ventil zum wahlweisen Öffnen der ersten und/oder der zweiten Absaugleitung aufweist.

Gemäß einer bevorzugten Ausführungsform der Erfindung ist die Entsorgevorrichtung als Absaughaube für Lacktrommeln ausgebildet. Diese Absaughaube ist anhebbar und absenkbar auf eine Lacktrommel aufsetzbar. Bevorzugt weist eine derartige Absaughaube einen Ringspalt außerhalb der Lacktrommel auf, der die zweite Absaugleitung ausbildet bzw. mit dieser verbunden ist. Die Absaughaube wirkt bei dem leistungsträchtigen Rührprozeß wie ein Deckel, der die Lacktrommel verschließt.

Wenn nun bei aufgesetzter Absaughaube das Einfüllen der pulvrigen Feststoffe in die Lacktrommel erfolgt, wird zunächst die erste Absaugleitung in Betrieb gesetzt, wodurch ein Abluftstrom durch die Eingabeöffnung erzeugt wird, so daß dort keine Stäube austreten können. Dieser Abluftstrom wird über den Staubfilter geführt, die vom Staub gereinigte Abluft kann dann nach außen abgeführt werden. Wenn das Einstreuen des Feststoffes beendet wird, ist die Staubbelastung in der Lacktrommel nur noch minimal. Eine Staubentsorgung ist daher nicht mehr notwendig. Daher wird die erste Absaugleitung geschlossen.

Wenn nun das Feststoff-Bindemittel-Gemisch intensiv bearbeitet wird und sich dabei erwärmt, verdampft aus dem Bindemittel Lösemittel und tritt in den Dampfraum der Lacktrommel. Nun wird über die zweite Absaugleitung entsorgt. Da zu diesem Zeitpunkt des Verfahrens praktisch keine Stäube mehr anfallen, ist ein Filter in dieser zweiten Absaugleitung nicht unbedingt notwendig; es ist aber möglich, eine Hilfsfiltereinrichtung vorzusehen. Die erste und und zweite Absaugleitung münden in eine gemeinsame Leitung, wobei in dieser gemeinsamen Leitung ein Absorber für Lösemitteldämpfe vorgesehen sein kann.

Bei der vorstehend beschriebenen Ausführungsform der Absaughaube mit Ringspalt ist der Dampfraum der Lacktrommel durch die Absaughaube verschlossen. Die durch die Undichtigkeit zwischen Lacktrommel und Absaughaube austretenden Dämpfe werden durch die außerhalb der Lacktrommel liegende Randabsaugung (Ringspalt) erfaßt und über die zweite Absaugleitung entsorgt. Diese Entsorgung ist besonders wirksam, wenn sie in Kombination mit der Absaughaube verwendet wird, wie sie Gegenstand der deutschen Gebrauchsmusteranmeldung (anwaltliches Aktenzeichen: T 11 655 Gb) vom gleichen Anmeldetag ist. Diese Absaughaube weist einen auf der Lacktrommel aufliegenden Zwischendeckel auf, der verhindert, daß eine große Menge an Lösemitteldämpfen überhaupt aus der Lacktrommel austreten. Zwischen dem Zwischendeckel und der Lacktrommel austretende Lösemitteldämpfe werden aus dem äußeren Rand der Absaughaube vorgesehenen Saugschlitzen aufgenommen und dann der Entsorgevorrichtung zugeführt. Um dies zu ermöglichen weist die Absaughaube einen größeren Radius als der Zwischendeckel auf.

Es ist bevorzugt, daß die erste Absaugleitung in Strömungsrichtung von dem Staubfilter mit einer Klappe verschließbar ist. Nach Beendigung des Einfüllprozesses und Verschließen der ersten Absaugleitung kann dann verhindert werden, daß vom Staubfilter zurückfallender Feststoffstaub unerwünscht in die Lacktrommel gelangt. Es besteht die Möglichkeit, eine zusätzliche Ableitung vorzusehen, über die solche Feststoffreste nach außen abgeführt werden können.

Die erste und die zweite Absaugleitung können jeweils mit einem ziehharmonika-artigen Faltenbalg ausgestattet sein. Bekannte Absaughauben mit Rührwerken müssen angehoben werden, wenn die Lacktrommel entfernt bzw. entleert werden soll. Die Entsorgevorrichtung, die ja an der Absaughaube vorgesehen ist, muß dementsprechend mit angehoben bzw. abgesenkt werden. Die ziehharmonika-artigen Faltenbälge sorgen für eine Beweglichkeit in vertikaler Richtung, so daß dieses zerstörungsfrei und relativ belastungsfrei für die Leitungen durchgeführt werden kann.

Um den Staubfilter zu reinigen, ist er zweckmäßigerweise mit einer Rüttelvorrichtung verbunden oder auf seiner Strömungsrückseite mit Druckluft beaufschlagbar. Feststoffteilchen, die vom Staubfilter aufgefangen sind, werden so auf einfache und wirkungsvolle Weise gelöst und können bevorzugt in die Lacktrommel zurückgeleitet oder über die schon erwähnte zusätzliche Leitung abgeführt werden.

Dieser Rückführungprozeß wird erleichtert, wenn der Staubfilter in einem Gehäuse mit trichterförmig ausgebildetem Boden untergebracht ist.

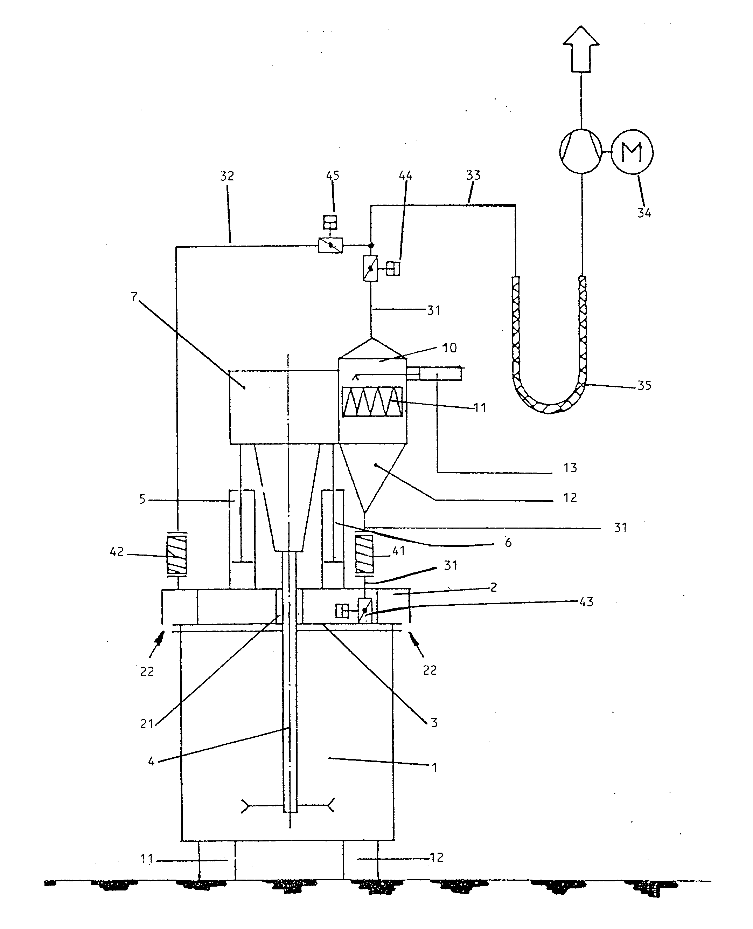

Im folgenden soll die Erfindung lediglich beispielhaft in einer Ausführungsform erläutert werden. Die einzige Figur zeigt eine schematische Gesamtansicht der Entsorgevorrichtung im Zusammenhang mit einer Lacktrommel und einem Rührwerk.

Eine Lacktrommel 1 ruht standfest auf Füßen 11, 12. Die Lacktrommel 1 ist mit einer Absaughaube 2 verschlossen, wobei an der Absaughaube 2 ein Zwischendeckel 3 vorgesehen ist, der auf der Oberkante der Lacktrommel aufliegt. Zwischen Absaughaube 2 und Zwischendeckel 3 ist keine zusätzliche Dichtung notwendig, so daß ein Druckausgleich zwischen dem Inneren der Lacktrommel und der Außenatmosphäre stattfinden kann. Sie kann jedoch zur Erhöhung des Effektes angebracht werden. Durch eine Öffung 21 in der Absaughaube 2 ist ein Rührwerk 4 geführt. Dieses Rührwerk 4 ist zusammen mit der Absaughaube 2 anhebbar und absenkbar, wobei der Hub durch Teleskopführungen 5, 6 vorgegeben ist. Am Antriebsteil 7 des Rührwerks 4 ist ein Gehäuse 10 verbunden, in dem ein Staubfilter 11 untergebracht ist. Der Staubfilter 11 kann beispielsweise ein gefaltetes Vlies sein. Der Boden 12 des Gehäuses 10 ist trichterförmig ausgebildet und mündet in der ersten Absaugleitung 31. In diesem stromaufwärts liegenden Teil der Absaugleitung 31 ist ein ziehharmonka-artiger Faltenbalg 41 angeordnet. Die erste Absaugleitung 31 ist durch die Absaughaube 2 geführt und mit einer Klappe 43 gegenüber der Lacktrommel 1 verschließbar. Auch die zweite Absaugleitung 32 weist einen ziehharmonika-artigen Falgenbalg 42 auf. Sie ist ebenfalls durch die Absaughaube 2 geführt und entsorgt die Lösemitteldämpfe, die zwischen Zwischendeckel 3 und Oberkante der Lacktrommel 1 durch einen umlaufenden Schlitz 22 in die Absaughaube 2 eintreten. Jede der beiden Leitungen 31, 32 können mit Hilfe jeweils eines Ventils 44, 45 verschlossen oder geöffnet werden, so daß ein wahlweiser Betrieb möglich ist. Die Leitungen 31, 32 werden in eine gemeinsame Leitung 33 entsorgt, in die ein Ventilator 34 geschaltet ist, der für Unterdruck in der Entsorgevorrichtung sorgt. Ein in die Leitung 33 geschalteter flexibler Schlauch 35 dient dazu, baulichen Gegebenheiten Rechnung zu tragen. Über dem Staubfilter 11 befindet sich eine Drucklufteinrichtung 13.

## Patentansprüche

1. Entsorgevorrichtung für feste und gasförmige Abfallstoffe beim Herstellen von Gemischen aus pulvrigen Feststoffen und flüchtige Anteile enthaltenden Bindemitteln oder dergleichen, mit einer Absaugvorrichtung und mit einem Staubfilter
**dadurch gekennzeichnet,**
daß eine erste Absaugleitung (31) mit wenigstens einem in die Leitung eingeschalteten Staubfilter (11) und eine zweite Absaugleitung (32) vorgesehen sind, welche über eine gemeinsame Leitung (33) entsorgbar sind, wobei jede der Absaugleitungen (31, 32) je ein Ventil (44, 45) zum wahlweisen Öffnen der ersten und/oder zweiten Absaugleitung aufweist.

2. Vorrichtung nach Anspruch 1, dadurch gekennzeichnet, daß die erste Absaugleitung (31) in Strömungsrichtung vor dem Staubfilter (11) mit einer Klappe (43) verschließbar ist.

3. Vorrichtung nach Anspruch 1 oder 2, dadurch gekennzeichnet, daß in der ersten (31) und der zweiten (32) Absaugleitung jeweils ein ziehharmonika-artiger Faltenbalg (41, 42) angeordnet ist.

4. Vorrichtung nach einem der Ansprüche 1 bis 3, dadurch gekennzeichnet, daß der Staubfilter (11) mit einer Rütteleinrichtung verbunden ist.

5. Vorrichtung nach einem der Ansprüche 1 bis 3, dadurch gekennzeichnet, daß der Staubfilter (11) auf seiner Strömungsrückseite mit einer Drucklufteinrichtung (13) beaufschlagbar ist.

6. Vorrichtung nach einem der Ansprüche 1 bis 5, dadurch gekennzeichnet, daß der Staubfilter (11) in einem Gehäuse (10) mit trichterförmig ausgebildetem Boden (12) untergebracht ist.

7. Vorrichtung nach einem der Ansprüche 1 is 6, dadurch gekennzeichnet, daß unter dem Staubfilter (11) eine zusätzliche Ableitung für Staub vorgesehen ist.

8. Vorrichtung nach einem der Ansprüche 1 bis 7, dadurch gekennzeichnet, daß die Ventile (44, 45) in den beiden Absaugleitungen (31, 32) in Form einer Umschaltklappe oder eines Umschaltventils (3-Wege-Ventils) ausgebildet sind.

9. Entsorgungsvorrichtung nach einem der Ansprüche 1 bis 8, dadurch gekennzeichnet, daß sie in Form einer anhebbaren und absenkbaren Absaughaube (2) für Lacktrommeln (1) ausgebildet ist, die zwei getrennt geführte Absaugleitungen (31) und (32) aufweist.

10. Vorrichtung nach Anspruch 9, dadurch gekennzeichnet, daß die erste Absaugleitung (31) mit einer Klappe (43) verschließbar ist und daß die zweite Absaugleitung (32) in Form einer Randabsaugung (22) ausgebildet ist.

11. Vorrichtung nach Anspruch 10, dadurch gekennzeichnet, daß die erste Absaugleitung (31) nahezu zentrisch im Absaugdeckel angeordnet ist.

12. Vorrichtung nach Anspruch 11 oder 12, dadurch gekennzeichnet, daß die Absaughaube (2) mit einem Zwischendeckel (3) versehen ist, der in abgesenktem Zustand auf der Lacktrommel (1) aufliegt und mit der Absaughaube (2) anhebbar ist, wobei der Radius der Absaughaube (2) größer als der des Zwischendeckels (3) ist, wodurch die Randabsaugung (22) ausgebildet wird.

13. Verwendung der Vorrichtung nach einem der Ansprüche 1 bis 12 zur Herstellung von Gemischen aus pulverförmigen Feststoffen und flüchtige Anteile enthaltenden Bindemitteln.